# EUROPEAN PATENT APPLICATION

(11) **EP 3 926 195 A1**
(43) Date of publication of application: **22.12.2021**
(21) Application number: 20755110.2
(22) Date of filing: 07.02.2020
(51) Int. Cl.: F16C 35/06, B62D 7/09, B62D 7/14, B62D 7/18, B62D 5/04

(54) **HUB UNIT HAVING STEERING FUNCTION, AND VEHICLE EQUIPPED WITH SAME**

(30) Priority: 13.02.2019 JP 2019023540
(71) Applicant: NTN Corporation, Osaka-shi, Osaka 550-0003 (JP)
(72) Inventor: UTSUNOMIYA, Satoshi, Iwata-shi, Shizuoka 438-8510 (JP); OHATA, Yusuke, Iwata-shi, Shizuoka 438-8510 (JP)
(74) Representative: Maikowski & Ninnemann Patentanwälte Partnerschaft mbB
(86) International application number: PCT/JP2020/004994
(87) International publication number: WO 2020/166537

(57) **Abstract**

Provided is a steering function-equipped hub unit including: a hub unit body including a hub bearing; a unit support member configured to be provided to a chassis frame component, the unit support member supporting the hub unit body such that the hub unit body is rotatable about a turning axis extending in a vertical direction; and a steering actuator configured to rotationally drive the hub unit body about the turning axis, wherein the hub bearing includes an outer race integrally provided with turning shaft parts protruding upward and downward in the vertical direction on an outer peripheral surface of the outer race, each of the turning shaft parts having an axis coinciding with the turning axis, and the hub unit body is rotatably supported by the unit support member through the turning shaft parts.

## Description

### CROSS REFERENCE TO THE RELATED APPLICATION

This application is based on and claims Convention priority to Japanese patent application No. 2019-023540, filed February 13, 2019, the entire disclosure of which is herein incorporated by reference as a part of this application.

### BACKGROUND OF THE INVENTION

### (Field of the Invention)

The present invention relates to a steering function-equipped hub unit and a vehicle including the same. The present invention also relates to a technology of controlling left and right wheels to a suitable steering angle in accordance with a driving condition to improve fuel economy and enhance stability and safety of driving.

### (Description of Related Art)

General vehicles such as automobiles include a steering wheel mechanically connected to a steering device, the steering device having two opposite ends connected to left and right wheels through tie rods. Therefore, turning angles of the left and right wheels in accordance with an operation of the steering wheel are defined by an initial setting.

Known vehicle geometries include: (1) "parallel geometry" in which left and right wheels have a same turning angle; and (2) "Ackermann geometry" in which an inner wheel in turning is turned by a larger wheel angle than that of an outer wheel in turning so as to have a single center of turning.

In Ackermann geometry, a difference in turning angles of the left and right wheels is set such that the respective wheels turn about a single common point so as to smoothly turn the vehicle when turning in a low-speed range where a negligible centrifugal force acts on the vehicle. In contrast, when turning in a high-speed range where a centrifugal force is not negligible, parallel geometry is preferred to Ackermann geometry because it is desirable that the wheels generate a cornering force in a direction in which the centrifugal force is counterbalanced.

As mentioned above, since a steering device of a general vehicle is mechanically connected to wheels, the steering device can usually assume only a single fixed steering geometry and is often configured in an intermediate geometry between Ackermann geometry and parallel geometry. In such a case, however, the turning angle of the outer wheel becomes excessively large in a low-speed range due to an insufficient difference in the turning angles of the left and right wheels, whereas the turning angle of the inner wheel becomes excessively large in a high-speed range. Thus, where there is unnecessarily unbalanced distribution of a wheel lateral force between the inner and outer wheels (inner wheel and outer wheel), travel resistance may be increased, leading to worsening of fuel economy and early wear of the tires. Further, there is another problem that the inner and outer wheels cannot be effectively used, causing deterioration in smooth cornering.

As a conventional supplementary turning function-equipped hub unit, Patent Document 4 published a supplementary turning function-equipped hub unit including a rotary component having a concave spherical seat on an outer spherical surface of an outer race and a turning shaft part having a spherical portion to be fitted into the concave spherical seat so as to be rotatable in an arbitrary direction.

### [Related Document]

### [Patent Document]

[Patent Document 1] JP Laid-open Patent Publication No. 2009-226972
[Patent Document 2] DE Patent Publication No. 102012206337
[Patent Document 3] JP Laid-open Patent Publication No. 2014-061744
[Patent Document 4] JP Laid-open Patent Publication No. 2019-006225

### SUMMARY OF THE INVENTION

According to proposals of Patent Documents 1 and 2, a steering geometry can be changed, but the following problems may arise.

In Patent Document 1, positions of a knuckle arm and a joint are relatively changed in order to change a steering geometry. However, it is extremely difficult to install a motor actuator that can provide such a large force that the vehicle geometry can be changed in such parts due to space constraints. In addition, a change in the positions of the knuckle arm and the joint would only cause a small change in the wheel angles, it is necessary to greatly change, that is, to greatly move the positions of the knuckle arm and the joint in order to obtain a large effect.

In Patent Document 2, use of two motors not only increases costs because of the increased number of the motors, but also complicates the control.

Patent Document 3 can only be applied to four-wheel independent turning vehicles. Also, since a hub bearing is supported in a cantilever manner with respect to a turning shaft, rigidity could be reduced, and a steering geometry could be changed due to generation of an excessive g-force during driving.

Further, where a speed reducer is provided on the turning shaft, large power would be required. Therefore, a large motor should be provided, which in turn makes it difficult to dispose the entire motor in an inner peripheral part of a wheel. Also, where a speed reducer having a large speed reduction ratio is provided, responsiveness would be deteriorated.

Since a mechanism having a conventional supplementary steering function as described above is intended to arbitrarily change a toe angle or a camber angle of a wheel in a vehicle, the mechanism requires multiple motors and multiple speed reduction mechanisms and thus has a complicated configuration. Also, this makes it difficult to ensure rigidity, and it is necessary to increase the size of the mechanism in order to ensure rigidity, resulting in an increased weight of the mechanism.

Furthermore, where a king pin axis coincides with a turning axis of a mechanism having a supplementary steering function, constituent components are disposed rearward (on a vehicle body side) in the hub unit, so that the entire mechanism has a larger size and an increased weight.

A conventional supplementary turning function-equipped hub unit (Patent Document 4) includes a rotary-side component having a concave spherical seat disposed on an outer peripheral surface of an outer race and a turning shaft part having a spherical surface portion to be fitted into the concave spherical seat so as to be rotatable in an arbitrary direction. A spherical sliding bearing having such a concave spherical seat and such a spherical surface portion may be difficult to manufacture and may result in a higher manufacturing cost.

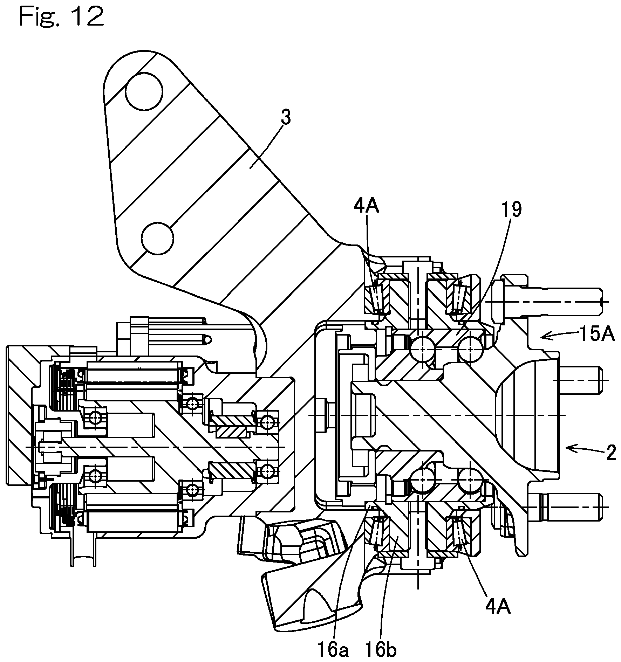

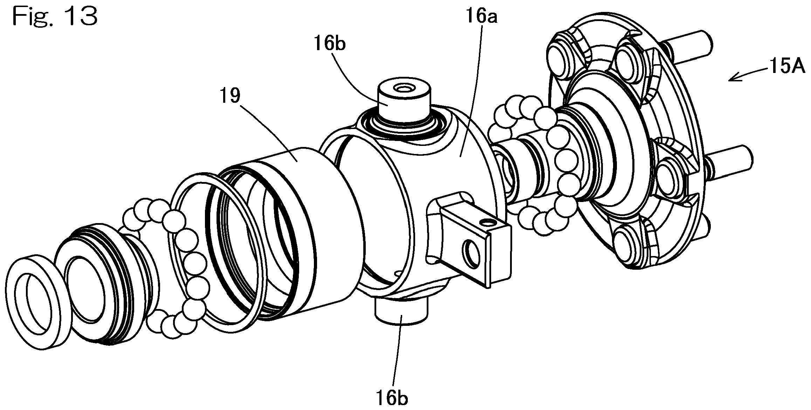

In this regard, the Applicant of the present application has proposed, as shown in Fig. 12, a steering function-equipped hub unit in which a hub unit body 2 is supported by a unit support member 3 through rolling bearings 4A, 4A disposed at two locations above and below the hub unit body. As shown in Fig. 12 and Fig. 13, it is preferable in terms of ease of manufacture, as for a hub bearing 15A which performs supplementary steering in the steering function-equipped hub unit, to separately manufacture an outer ring 16a including turning shaft parts 16b and an outer race 19 including a raceway surface of the hub bearing 15A and to assemble these components by fitting and fixing an outer peripheral surface of the outer race 19 to an inner peripheral surface of the outer ring 16a by e.g. press-fitting. However, in a case where the outer ring 16a and the outer race 19 are separately manufactured and assembled together, the following problems may arise.

Where the outer peripheral surface of the outer race 19 is fitted and fixed to the inner peripheral surface of the outer ring 16a by press-fitting or the like, it is necessary to strictly control interference of press-fitting between the outer ring 16a and the outer race 19.

Where the press-fitting interference is too small, if an external force from a road surface acts on the steering function-equipped hub unit, a fitting interface between the outer ring 16a and the outer race 19 may be deformed, leading to reduction in wheel attachment rigidity.

On the other hand, where the press-fitting interference is too large, an outer-race raceway groove (raceway surface) may have large deformation, and a greater variation is produced in preload adjustment of the hub bearing 15A, so that the adjustment becomes difficult. A too small preload to the hub bearing 15A leads to reduction in wheel attachment rigidity, whereas a too much preload may result in a short service life.

Accordingly, the divided structure including the outer ring and the outer race requires a large number of manufacturing steps and a large cost for controlling the press-fitting interference and the preload of the hub bearing in order to suitably maintain the rigidity of the structure.

An object of the present invention is to provide a steering function-equipped hub unit which can have improved rigidity as the entire hub unit and be produced with a reduced number of manufacturing steps and at a reduced cost as well as a vehicle including the same.

A steering function-equipped hub unit according to the present invention includes:
a hub unit body including a hub bearing configured to support a wheel;
a unit support member configured to be provided to a chassis frame component of a suspension device, the unit support member supporting the hub unit body such that the hub unit body is rotatable about a turning axis extending in a vertical direction; and
a steering actuator configured to rotationally drive the hub unit body about the turning axis,
wherein the hub bearing includes an outer race integrally provided with turning shaft parts protruding upward and downward in the vertical direction on an outer peripheral surface of the outer race, each of the turning shaft parts having an axis coinciding with the turning axis, and
the hub unit body is rotatably supported by the unit support member through the turning shaft parts.

The expression "integrally provided" or the like means that the outer race and the turning shaft parts are formed as a single piece of a product from a single material by e.g. casting, machining or the like, instead of being constituted as multiple elements jointed together.

In order to control the behavior of a vehicle, it is necessary to accurately control turning angles of wheels. Then, in order to properly maintain the alignment of the wheels and improve steering stability, safety, and steering feeling, wheel attachment rigidity is important.

In a steering function-equipped hub unit of a reference example, where priority is given to ease of manufacturing of a hub bearing which performs supplementary steering, it was preferable to separately manufacture an outer ring including turning shaft parts and an outer race having a raceway surface of the hub bearing and to assemble them by press-fitting.

In the divided structure including the outer ring and the outer race, however, it was necessary to strictly control interference of the press-fitting to maintain the wheel attachment rigidity at high level, so that a large number of manufacturing steps and a large cost were required.

According to the constitution of the present invention, the hub bearing includes an outer race integrally provided with turning shaft parts protruding upward and downward in the vertical direction on an outer peripheral surface of the outer race, each of the turning shaft parts having an axis coinciding with the turning axis. In other words, in the hub bearing, the outer ring including the turning shaft parts are integrated with the outer race including the raceway surface of the hub bearing, and the raceway surface of the hub bearing is directly provided on an inner peripheral surface of the outer ring. This constitution makes it possible to eliminate factors causing a variation in rigidity due to the press-fitting interference between the outer ring and the outer race, to maintain high rigidity without requiring a large number of steps and to accurately control the alignment. Further, since the raceway surface of the outer race is direct processed, it is easier to control accuracy of a raceway diameter and to adjust a preload. As a consequence, manufacturability can also be improved. Since the turning shaft parts are integrally provided on the outer peripheral surface of the outer race, it is possible to simplify the manufacture and to reduce the manufacturing cost, as compared to a conventional technology in which spherical sliding bearings are provided to the turning shaft parts. Thus, it is possible to enhance the rigidity of the entire hub unit and to reduce the number of manufacturing steps and the cost.

The outer race may be provided with an arm part configured to transmit a driving force of the steering actuator, and the arm part may be integrally provided to the outer race so as to protrude in a horizontal direction on the outer peripheral surface of the outer race. In this case, it is possible to reduce the number of components, to simplify assembly of the hub unit, and to further enhance the rigidity of the hub unit, as compared to a structure including an outer race and an arm part as separate components.

The steering function-equipped hub unit may include a preload applicator applying a preload to the hub bearing, and the preload applicator may be a nut fastened to fix an inboard-side end of an inner race part of the hub bearing with respect to a hub axle part of an outboard-side part of the hub bearing. In this case, a preload can be easily applied to the hub bearing by fastening a nut to the inboard-side end of the inner race part. Thus, the rigidity of the hub bearing can be improved.

The steering function-equipped hub unit may include a preload applicator applying a preload to the hub bearing, and the preload applicator may be a crimped part fixing an inboard-side end of an inner race part of the hub bearing with respect to a hub axle part of an outboard-side part of the hub bearing by orbital forming. In this case, it is possible to reduce the number of components and thereby to simplify the structure, as compared to the structure in which a nut is fastened to the inboard-side end of the inner race part.

The outer race may be made of high-carbon steel, and a surface hardened layer may be provided on the raceway surface of the outer race by induction hardening. In this case, since the raceway surface of the outer race has a surface hardened layer, it is possible to improve wear resistance and to maintain toughness because an inner layer of the outer race is not hardened. Since the surface hardened layer has high compressive residual stress, fatigue strength can also be improved at the same time. Further, the induction hardening makes it easy to provide the surface hardened layer on the raceway surface of the outer race and any other area as needed.

The outer race may be made of case hardening steel, and a surface hardened layer may be provided on an entire surface of the outer race by carburizing hardening. In this case, the manufacturing is facilitated and the cost can be reduced, as compared to a case where the surface hardened layer is provided only on a part of the outer race.

A steering system according to the present invention includes: a steering function-equipped hub unit having any of the above constitutions according to the present invention; and a control device configured to control the steering actuator of the steering function-equipped hub unit,
wherein the control device includes a steering control section configured to output a current command signal in accordance with a given steering angle command signal and an actuator drive control section configured to output a current in accordance with the current command signal inputted from the steering control section to drive and control the steering actuator.

According to this constitution, the steering control section is configured to output a current command signal in accordance with a given steering angle command signal. The actuator drive control section is configured to output a current in accordance with the current command signal inputted from the steering control section to drive and control the steering actuator. Therefore, it is possible to arbitrarily change a wheel angle in addition to steering in accordance with an operation of a steering wheel by a driver.

A vehicle according to the present invention includes steering function-equipped hub units having any of the above constitutions according to the present invention, the steering function-equipped hub units supporting front wheels, or rear wheels, or all of the front wheels and the rear wheels.

Therefore, the above-described effects of the steering function-equipped hub units according to the present invention can be obtained. The front wheels typically serve as steered wheels, and application of the steering function-equipped hub units according to the present invention to the steered wheels makes it possible to effectively adjust toe angles during driving. On the other hand, the rear wheels typically serve as non-steered wheels, and application of the hub units to the non-steered wheels makes it possible to reduce a minimum turning radius of the vehicle when driving at low speed by slightly steering the non-steered wheels.

The present invention encompasses any combination of at least two features disclosed in the claims and/or the specification and/or the drawings. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a longitudinal section view of a steering function-equipped hub unit according to a first embodiment of the present invention and surrounding features;
Fig. 2 is a horizontal section view of the steering function-equipped hub unit and the surrounding features;
Fig. 3 is a perspective view showing an external appearance of the steering function-equipped hub unit;
Fig. 4 is a side view of the steering function-equipped hub unit;
Fig. 5 is a plan view of the steering function-equipped hub unit;
Fig. 6 is a section view along line VI-VI of Fig. 4;
Fig. 7 is an enlarged section view of an outer race and the like of a hub bearing of the hub unit;
Fig. 8 is an exploded perspective view showing configurations of components of the hub bearing;
Fig. 9 is a schematic plan view of an example of a vehicle including the steering function-equipped hub unit;
Fig. 10 is a schematic plan view of another example of a vehicle including any of the steering function-equipped hub units;
Fig. 11 is a schematic plan view of yet another example of a vehicle including any of the steering function-equipped hub units;
Fig. 12 is a longitudinal section view of a steering function-equipped hub unit of a reference example; and
Fig. 13 is an exploded perspective view showing configurations of components of a hub bearing of the reference example.

### DESCRIPTION OF THE EMBODIMENTS

### First Embodiment

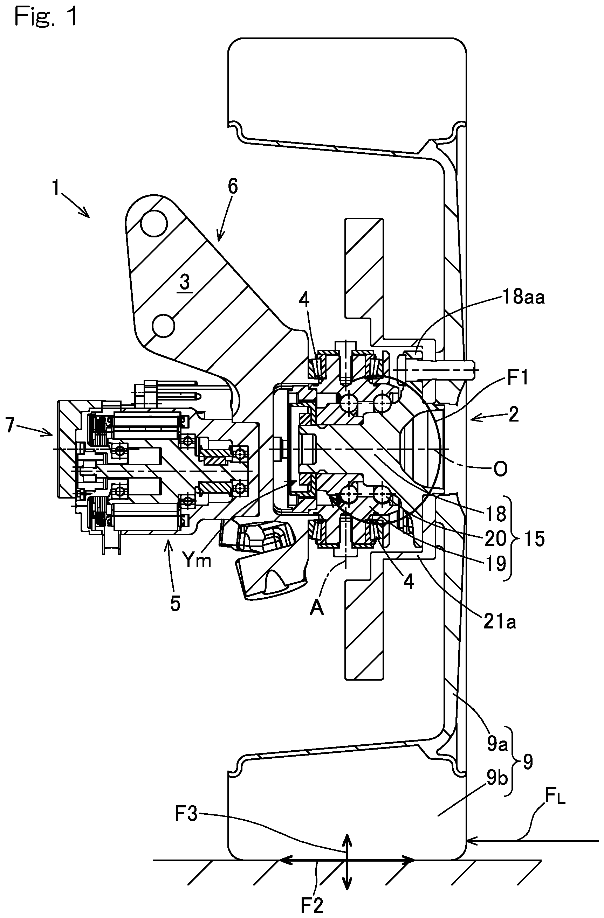

A steering function-equipped hub unit according to an embodiment of the present invention will be described with reference to Fig. 1 to Fig. 9.

### Schematic Structure of Steering Function-Equipped Hub Unit

As shown in Fig. 1, the steering function-equipped hub unit 1 includes: a hub unit body 2, a unit support member 3, rotation-permitting support components 4, and a steering actuator 5. The unit support member 3 is integrally provided to a knuckle 6, which is a chassis frame component. An actuator body 7 of the steering actuator 5 is disposed on an inboard side with respect to the unit support member 3, and the hub unit body 2 is disposed on an outboard side with respect to the unit support member 3. It should be noted that the term "outboard side" refers to an outer side of a vehicle in a vehicle widthwise direction in a state where the steering function-equipped hub unit 1 is mounted in the vehicle, and the term "inboard side" refers to a side closer to a center of the vehicle in the vehicle widthwise direction. The steering function-equipped hub unit 1 may sometimes simply be referred to as "hub unit 1".

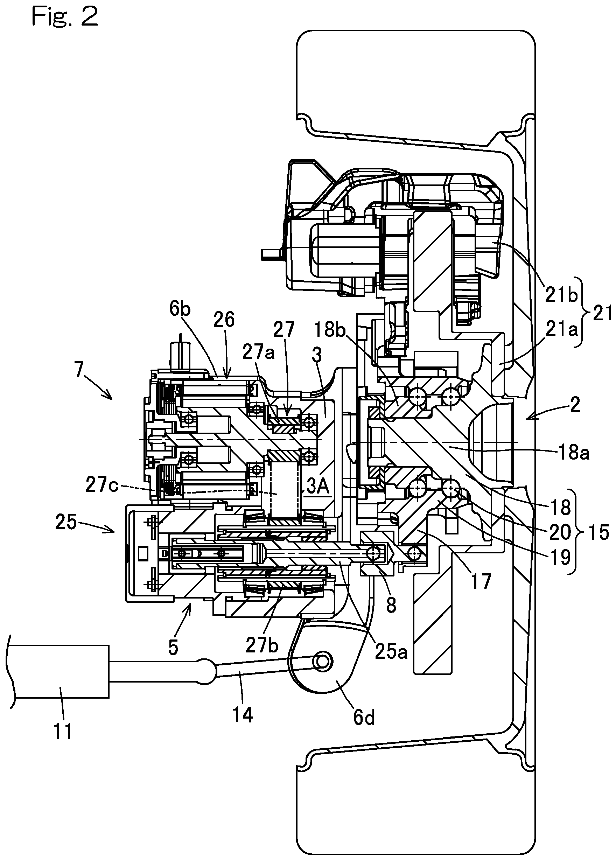

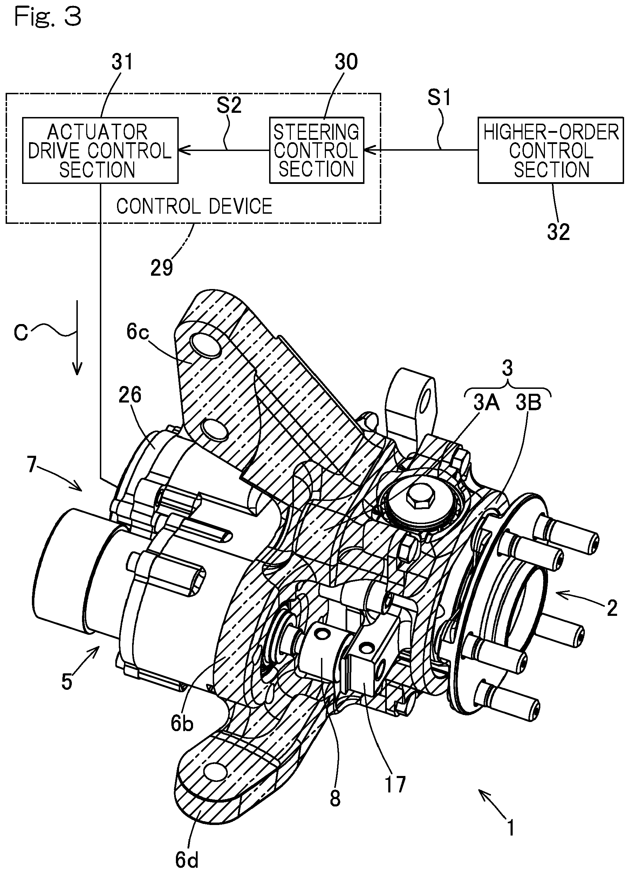

As shown in Fig. 2 and Fig. 3, the hub unit body 2 and the actuator body 7 are coupled to each other through a joint part 8. The joint part 8 is typically provided with a non-illustrated boot for protection against water and dust.

As shown in Fig. 1, the hub unit body 2 is supported by the unit support member 3 through the rotation-permitting support components 4, 4 disposed at two locations above and below the hub unit body such that the hub unit body 2 is rotatable about a turning axis A extending in a vertical direction. The turning axis A is different from a rotation axis O of a wheel 9 and from a king pin axis for main steering. In a general vehicle, a king pin angle is set in a range from 10 to 20 degrees in order to improve stability of the vehicle during driving straight. In contrast, the steering function-equipped hub unit 1 of the present embodiment has the turning axis having a different inclination angle (axis) from the king pin angle. The wheel 9R includes a wheel body 9a and a tire 9b.

### Installation of Steering Function-Equipped Hub Unit 1

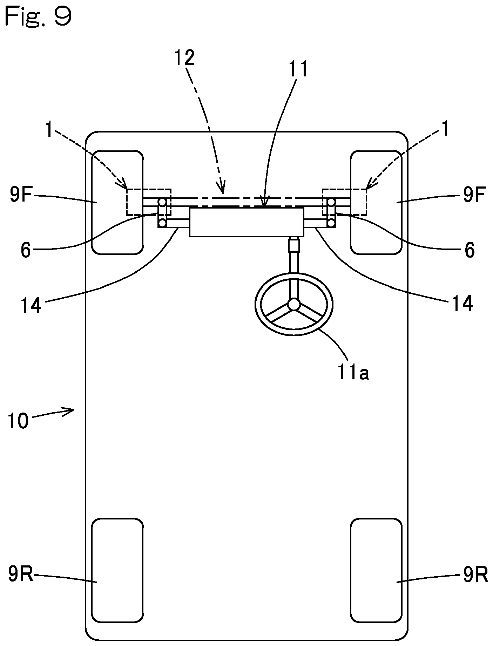

The steering function-equipped hub unit 1 of the present embodiment is a mechanism for independently steering one of left and right wheels by a small angle in addition to steering by the steered wheels, or specifically in addition to steering by the steering device 11 of front wheels 9F of the vehicle 10 as shown in Fig. 9. The hub unit 1 is integrally provided to the knuckle 6 of a suspension device 12.

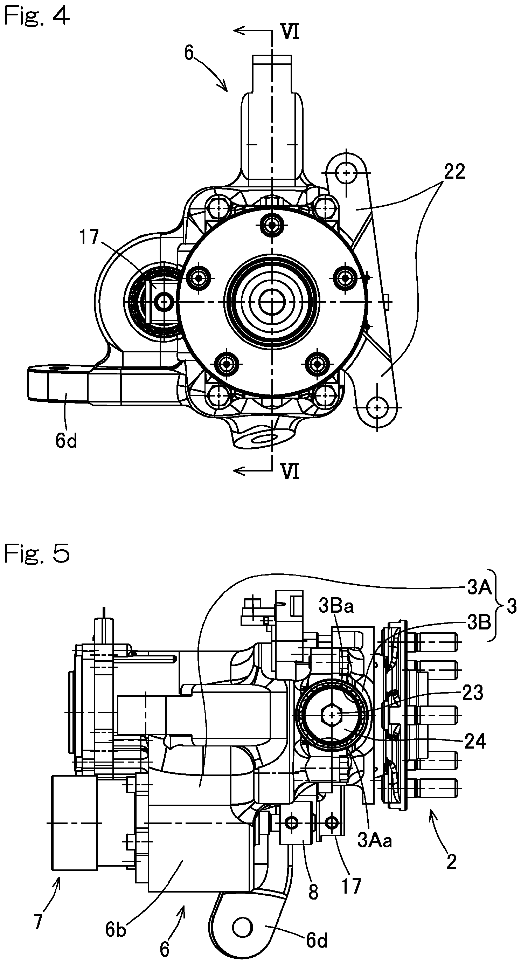

As shown in Fig. 2 and Fig. 9, the steering device 11 is mounted in a vehicle body and is configured to operate in accordance with an operation of the steering wheel 11a by a driver or a command or the like from a non-illustrated autonomous driving device or driving assistance device. The steering device 11 has tie rods 14 configured to move back and forth and coupled to steering coupling parts 6d (which will be described later) of unit support members 3. The steering device 11 may be any type of steering devices, such as a rack and pinion type. The suspension device 12 may be, for example, a strut suspension mechanism in which shock absorbers are directly fixed to the knuckles 6, or may be a multilink suspension mechanism, or any other type of suspension mechanisms. A brake 21 includes a brake rotor 21a and a brake caliper 21b. The brake caliper 21b is mounted to brake caliper mount parts 22 (Fig. 4) which are formed integrally with the outer race 19 (which will be described later) so as to protrude in an arm-like manner at two upper and lower locations.

### Hub Unit Body 2

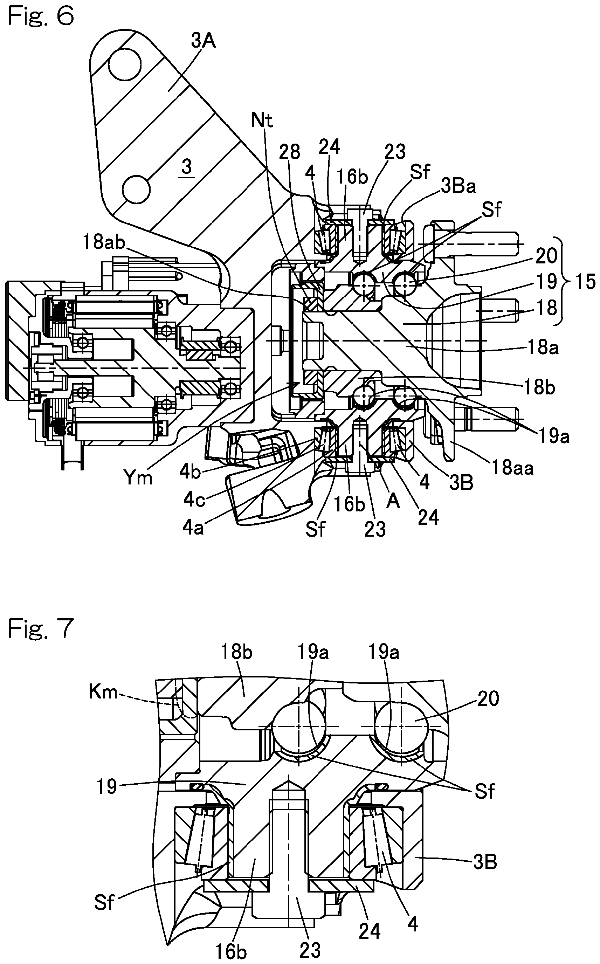

As shown in Fig. 1, the hub unit body 2 includes a hub bearing 15 for supporting the wheel 9, a preload applicator Ym for applying a preload to the hub bearing 15, and an arm part 17 (Fig. 3) which receives a steering force. As shown in Fig. 6, the hub bearing 15 includes an inner race 18, an outer race 19, and rolling elements 20 such as balls interposed between the inner race 18 and the outer race 19. The hub bearing 15 serves to connect a vehicle-body-side member and the wheel 9 (Fig. 1).

The hub bearing 15 is, in the illustrated example, an angular contact ball bearing in which the outer race 19 serves as a fixed ring, and the inner race 18 serves as a rotary ring, and the rolling elements 20 are disposed in double rows. The inner race 18 includes: a hub axle part 18a having a hub flange 18aa and constituting an outboard-side raceway surface; and an inner race part 18b constituting an inboard-side raceway surface. As shown in Fig. 1, the wheel body 9a of the wheel 9 is fixed to the hub flange 18aa by a bolt with a brake rotor 21a interposed therebetween. The inner race 18 is configured to rotate about the rotation axis O.

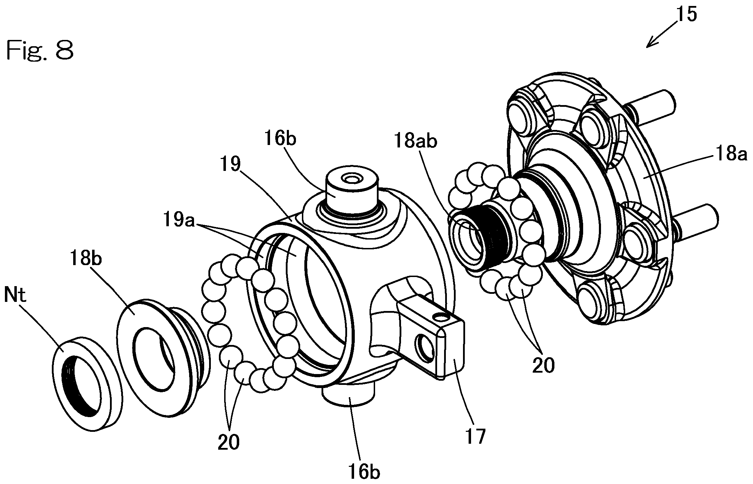

As shown in Fig. 6 and Fig. 8, the outer race 19 includes turning shaft parts 16b, 16b protruding toward opposite sides in a vertical direction on an outer peripheral surface of the outer race, each of the turning shaft parts having an axis coinciding with the turning axis A. Each of the turning shaft parts 16b, 16b, which are upper and lower mount shaft parts, has a trunnion shaft shape on the outer peripheral surface of the outer race 19 and is integrally provided to the outer race 19. The respective upper and lower turning shaft parts 16b, 16b are supported by the unit support member 3 through the rotation-permitting support components 4, 4, which will be described later. The expression "integrally provided" or the like means that the outer race 19 and the respective turning shaft parts 16b are formed as a single piece of a product from a single material by e.g. casting, machining or the like, instead of being constituted as multiple elements jointed together.

A reference example as shown in Fig. 12 and Fig. 13 gives priority to ease of manufacturing of an outer ring 16a and an outer race 19 of a hub bearing 15A and employs a structure in which the outer ring and the outer race, which are separately manufactured components, are assembled together by press-fitting. However, it is necessary to strictly control interference of the press-fitting to maintain the rigidity of the hub bearing at a high level, so that a large number of manufacturing steps and a large cost are required.

In contrast, in the present embodiment, the upper and lower turning shaft parts 16b, 16b are directly provided on the outer peripheral surface of the outer race 19 as shown in Fig. 6 and Fig. 8. In other words, in the hub bearing 15, the outer ring including the turning shaft parts 16b, 16b are integrated with the outer race 19 including the raceway surfaces 19a, so that it is possible to eliminate factors causing a variation in wheel attachment rigidity due to the press-fitting interference and to stably maintain the wheel attachment rigidity at a high level without requiring many steps for controlling the press-fitting interference. The factors causing the variation may include deformation at a press-fitting interface and a variation in preload adjustment of the hub bearing 15 due to deformation of the outer race.

As shown in Fig. 6 and Fig. 7, the outer race 19 including the upper and lower turning shaft parts 16b, 16b is made of, for example, high-carbon steel such as S45C or S53C by hot forging. A surface hardened layer Sf is provided on the raceway surfaces 19a, 19a of the outer race 19 and the turning shaft parts 16b by induction hardening. The surface hardened layer Sf may preferably have a layer depth suitably determined in view of necessary shock resistance and fatigue strength in accordance with the magnitudes of shock forces and repeated loads to be applied to the outer race 19 and the respective turning shaft parts 16b. As an alternative technique, the outer race 19 including the upper and lower turning shaft parts 16b, 16b may be made of, for example, case hardening steel such as SCM415 or SCr420 by cold forging, and a surface hardened layer Sf may be provided on an entire surface of the outer race 19 by carburizing hardening.

As shown in Fig. 2 and Fig. 8, the arm part 17 serves as a point of application of a supplementary steering force applied to the outer race 19 of the hub bearing 15. The arm part 17 is integrally provided to the outer race 19 so as to protrude in a horizontal direction on the outer peripheral surface of the outer race 19. The expression "integrally provided" or the like means that the outer race 19 and the arm part 17 are formed as a single piece of a product from a single material by e.g. casting, machining or the like, instead of being constituted as multiple elements jointed together. The arm part 17 is rotatably coupled to a linear output part 25a of the steering actuator 5 through the joint part 8. Thus, when the linear output part 25a of the steering actuator 5 advances and retracts, the hub unit body 2 is rotated, or supplementarily steered, about the turning axis A (Fig. 1).

### Preload Applicator Ym

As shown in Fig. 6 and Fig. 8, the preload applicator Ym is a nut Nt which is fastened to fix an inboard-side end of the inner race part 18b with respect to the hub axle part 18a of an outboard-side part of the hub bearing 15. Specifically, a bottom of a pressing member 28 having a bottomed, substantially cylindrical shape is interposed between the nut and the inboard-side end of the inner race part 18b, and the nut Nt screwing onto a male thread portion 18ab of an inboard side part of the hub axle part 18a applies a pressing force to an inboard-side end surface of the inner race part 18b, so that a desired preload is applied to the hub bearing 15. Thus, the rigidity of the hub bearing 15 can be improved.

The preload applicator Ym may be a crimped part Km (Fig. 7) which is plastically deformed by orbital forming to fix the inboard-side end of the inner race part 18b with respect to the hub axle part 18a. In this case, a desired preload can be applied to the hub bearing 15 by the crimped part Km.

### Rotation-Permitting Support Components and Unit Support Member

As shown in Fig. 6, each of the rotation-permitting support components 4 is constituted by a rolling bearing. In this example, a tapered roller bearing is used as the rolling bearing. The rolling bearing includes an inner race 4a fitted to an outer periphery of one turning shaft part 16b; an outer race 4b fitted to the unit support member 3; and a plurality of rolling elements 4c interposed between the inner race 4a and the outer race 4b.

The unit support member 3 includes a unit support member body 3A and a unit support member connecting body 3B. The unit support member connecting body 3B having a substantially ring shape is removably fixed to an outboard-side end of the unit support member body 3A. The unit support member connecting body 3B has an inboard-side lateral surface which has upper and lower parts each formed with a fitting-hole forming part 3Ba having a partial concave spherical surface.

As shown in Fig. 5 and Fig. 6, the unit support member body 3A has an outboard-side end which also has upper and lower parts each formed with a fitting-hole forming part 3Aa having a partial concave spherical surface. When the unit support member connecting body 3B is fixed to the outboard-side end of the unit support member body 3A, the fitting-hole forming parts 3Aa, 3Ba are brought together in the upper and lower parts and define fitting-holes each having a complete circumference. The outer races 4b are fitted into the respective fitting-holes. In Fig. 3, the unit support member 3 is indicated by one-dot chain lines.

As shown in Fig. 6, each of the turning shaft parts 16b is formed with a female thread portion extending in a radial direction of the outer race, and a bolt 23 is screwed into the female thread portion. With a disk-like pressing member 24 interposed between the bolt and an end face of the inner race 4a, the bolt 23 screwed into the female thread portion applies a pressing force to the end face of the inner race 4a so as to apply a preload to the corresponding rotation-permitting support component 4. Thus, the rigidity of each rotation-permitting support component 4 can be improved.

As shown in Fig. 1, the respective rotation-permitting support components 4 are located within the wheel body 9a of the wheel 9. In this example, the respective rotation-permitting support components 4 are located at an intermediate positions in a widthwise direction of the wheel body 9a, within the wheel body 9a. It should be noted that the rolling bearing as the rotation-permitting support component 4 may be an angular contact ball bearing or a four-point contact ball bearing, instead of a tapered roller bearing. Even in such a case, a preload can be applied in the same manner as described above.

### Force Acting on Hub Unit 1

While the vehicle is driving, a turning force F2 or a reaction force F3 from a road surface is constantly and repeatedly inputted to the hub unit 1 from various directions. In particular, when the tire 9b or the wheel body 9a hits an object on the road surface (e.g., when the vehicle drives up a curbstone) or when the vehicle takes an excessively steep turn, a large force F_{L} acts on a ground contact surface of the tire 9b in a lateral direction with respect to a direction in which the vehicle is moving, and the force is transmitted to the hub unit 1 as a large moment force F1. In order to maintain the normal alignment of the tire 9b and keep operability and stability even when a force acts on the hub unit 1, the rigidity of the hub unit 1 supporting the tire 9b is important, and the hub unit is required to have a highly rigid property.

### Steering Actuator 5

As shown in Fig. 3, the steering actuator 5 includes an actuator body 7 for rotationally driving the hub unit body 2 about the turning axis A (Fig. 1). As shown in Fig. 2, the actuator body 7 includes: a motor 26, a speed reduction gear 27 for reducing a speed of rotation of the motor 26, and a linear motion mechanism 25 for converting a forward and reverse rotary input of the speed reduction gear 27 into a reciprocating linear motion of the linear output part 25a. The motor 26 may be, for example, a permanent magnet synchronous motor, or a direct current motor, or an induction motor.

The speed reduction gear 27 may be a winding transmission mechanism such as a belt transmission mechanism, or a gear train or the like. In the example of Fig. 2, a belt transmission mechanism is used. The speed reduction gear 27 includes a driving pulley 27a, a driven pulley 27b, and a belt 27c. The driving pulley 27a is coupled to a motor shaft 26a of the motor 26, and the driven pulley 27b is provided in the linear motion mechanism 25. The driven pulley 27b is disposed parallel to the motor shaft 26a. A driving force of the motor 26 is transmitted from the driving pulley 27a to the driven pulley 27b through the belt 27c. The driving pulley 27a, the driven pulley 27b and the belt 27c constitute the speed reduction gear 27 of a winding type.

The linear motion mechanism 25 may be a feed screw mechanism such as a sliding screw or a ball screw, or a rack-and-pinion mechanism or the like. In this example, a feed screw mechanism with a trapezoidal sliding screw is used. Since the linear motion mechanism 25 is a feed screw mechanism with a trapezoidal sliding screw, the effect of preventing a reverse input from the tire 9b can be enhanced. The actuator body 7 including the motor 26, the speed reduction gear 27 and the linear motion mechanism 25 is assembled as a semi-assembled product and is removably mounted in a casing 6b by bolts or the like. Note that it is also possible to use a mechanism for directly transmitting the driving force of the motor 26 to the linear motion mechanism 25 without involving a speed reduction gear.

The casing 6b is integrally formed with the unit support member body 3A as a part of the unit support member 3. The casing 6b includes: a motor receiving part having a bottomed cylindrical shape and supporting the motor 26; and a linear motion mechanism receiving part supporting the linear motion mechanism 25. The motor receiving part is formed with a fitting hole for supporting the motor 26 at a predetermined position within the casing. The linear motion mechanism receiving part is formed with a fitting hole for supporting the linear motion mechanism 25 at a predetermined position within the casing and a through-hole for allowing the linear output part 25a to advance and retract therethrough.

As shown in Fig. 3, the unit support member body 3A includes: the casing 6b; a shock absorber mount part 6c to which a shock absorber is mounted; and a steering device connecting part 6d to which the steering device 11 (Fig. 2) is connected. The shock absorber mount part 6c and the steering device connecting part 6d are also integrally formed with the unit support member body 3A. The shock absorber mount part 6c is formed in a protruding manner on an upper portion of an outer surface part of the unit support member body 3A. The steering device connecting part 6d is formed in a protruding manner on a side part of the outer surface part of the unit support member body 3A.

### Effects and Advantages

According to the steering function-equipped hub unit 1 as described above, the hub unit body 2 including the hub bearing 15 for supporting the wheel 9 can be driven by the actuator body 7 to freely rotate about the turning axis A. That is, the linear output part 25a of the steering actuator 5 is driven by the motor 26 to advance and retract, so that the hub unit body 2 is caused to rotate through the arm part 17 connected to the linear output part 25a.

This rotation takes place as supplementary steering in addition to steering in accordance with an operation of the steering wheel by a driver, i.e., in addition to rotation of the knuckle 6 about the king pin by the steering device 11 and as independent steering of a single wheel. The angles of supplementary steering of the left and right wheels 9, 9 may be varied to arbitrarily change toe angles of the left and right wheels 9, 9.

Thus, the steering function-equipped hub unit 1 may be used in any of steered wheels such as front wheels and non-steered wheels such as rear wheels. Where the steering function-equipped hub units are used in steered wheels, the hub units are mounted to members whose directions are changed by the steering device 11, so that they serve as mechanisms for turning the left and right wheels 9 by a small angle in an independent manner or in associated manner, in addition to steering in accordance with an operation of the steering wheel by a driver. Supplementary steering only has to be performed by a small angle in order to improve motion performance of the vehicle, stability and safety of driving. A supplementarily steerable angle of ± 5 degrees or smaller is still sufficient. The steering actuator 5 is controlled to obtain an angle for supplementary steering.

It is also possible to change a difference in the turning angles of the left and right wheels in accordance with a traveling speed during turning. For example, the steering geometry may be changed during driving in such a way that parallel geometry is assumed when turning in a high-speed range and Ackermann geometry is assumed when turning in a low-speed range. Thus, the wheel angles can be arbitrarily changed during driving, so that the vehicle can have improved motion performance and thus can drive stably and safely. By suitably changing the steering angles of the left and right steered wheels during turning, it is also possible to reduce a turning radius of the vehicle and to improve small-turn performance. Further, even when driving straight, adjustment can be made by adapting the toe angles in accordance with a different situation so as to reduce travel resistance and prevent deterioration of fuel economy, and thereby to ensure driving stability.

Thus, in order to control the behavior of the vehicle, it is necessary to accurately control the turning angles of the wheels 9. Then, in order to properly maintain the alignment of the wheels 9 and improve steering stability, safety, and steering feeling, the attachment rigidity of the wheels 9 is important.

In a steering function-equipped hub unit of a reference example, where priority is given to ease of manufacturing of a hub bearing which performs supplementary steering, it was preferable to separately manufacture an outer ring including turning shaft parts and an outer race having a raceway surface of the hub bearing and to assemble them by press-fitting. In the divided structure including the outer ring and the outer race, however, it was necessary to strictly control interference of the press-fitting to maintain the wheel attachment rigidity at a high level, so that a large number of manufacturing steps and a large cost were required.

Thus, in the present embodiment, the upper and lower turning shaft parts 16b, 16b are integrally provided on the outer peripheral surface of the outer race 19 of the hub bearing 15. In other words, the hub bearing 15 is constructed such that the outer ring including the turning shaft parts 16b is integrated with the outer race 19 including the raceway surfaces 19a of the hub bearing 15, and the raceway surfaces of the hub bearing 15 are directly provided on the inner peripheral surface of the outer ring. This constitution makes it possible to eliminate deformation at an interface between the outer ring and the outer race, which is affected by press-fitting interference between them, to reduce the number of steps for controlling the press-fitting interference, and to maintain the wheel attachment rigidity at a high level.

Further, this constitution also makes it possible to eliminate deformation of the raceway surfaces of the outer race, which is affected by press-fitting interference between the outer ring and the outer race, to reduce the number of steps for controlling the press-fitting interference, to facilitate preload adjustment of the hub bearing 15, and to maintain the wheel attachment rigidity at a high level.

Also, where the outer ring is integrated with the outer race 19, and the raceway surfaces of the hub bearing 15 are directly provided on the inner peripheral surface of the outer ring, the dimensional accuracy of the raceway surfaces is not affected by press-fitting, and the accuracy of contact angles and circularity can be improved. Since the upper and lower turning shaft parts 16b, 16b are integrally provided on the outer peripheral surface of the outer race 19, it is possible to simplify the manufacture and to reduce the manufacturing cost, as compared to a conventional technology in which spherical sliding bearings are provided to the turning shaft parts.

Thus, it is possible to enhance the rigidity of the entire hub unit and to reduce the number of manufacturing steps and the cost.

Since the arm part 17 is integrally provided to the outer race 19, it is possible to reduce the number of components, to simplify assembly of the hub unit 1 and to further enhance the rigidity of the hub unit 1, as compared to a structure including an outer race and an arm part as separate components.

Where the nut Nt is employed as the preload applicator Ym, which is fastened to fix the inboard-side end of the inner race part 18b of the hub bearing 15, a preload can be easily applied to the hub bearing 15. Thus, the rigidity of the hub bearing 15 can be enhanced. Where the crimped part Km is employed as the preload applicator Ym to fix the inboard-side end of the inner race part 18b with respect to the hub axle part 18a by orbital forming, it is possible to enhance the rigidity of the hub bearing 15 by applying a preload, as well as to reduce the number of components and simplify the structure, as compared to the structure in which a nut Nt is fastened to the inboard-side end of the inner race part 18b.

Where the outer race 19 is made of high-carbon steel, and induction hardening is carried out at least to the raceway surfaces 19a of the outer race 19, it is possible to improve wear resistance because the surface hardened layer Sf is formed on the raceway surfaces 19a of the outer race 19, and to maintain toughness because an inner layer of the outer race 19 is not hardened. Since the surface hardened layer Sf has high compressive residual stress, fatigue strength can also be improved at the same time.

Where the outer race 19 is made of case hardening steel, and the surface hardened layer Sf is provided on an entire surface of the outer race 19 by carburizing hardening, the manufacturing is facilitated and the cost can be reduced, as compared to a case where the surface hardened layer is provided only on a part of the outer race 19.

### Other Embodiments

In the following description, the same reference numerals are used to denote parts that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

Depending on the magnitudes of shock forces and repeated loads to be applied to the turning shaft parts 16b, surface hardening treatment to the turning shaft parts 16b may be omitted. The unit support member 3 may be constituted as a separate member from the chassis frame component, and the unit support member 3 may be removably mounted to the chassis frame component.

### Application to Non-Steered Wheels

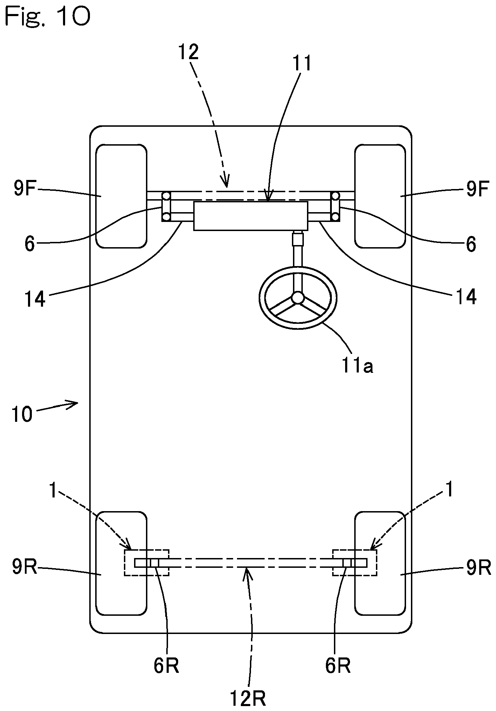

The steering function-equipped hub units 1 may be used in non-steered wheels. For example, as shown in Fig. 10, the hub units may be provided to chassis frame components 6R, which are wheel bearing installation parts, of a suspension device 12R supporting rear wheels 9R of a front-wheel-steering vehicle 10 in order to steer the rear wheels.

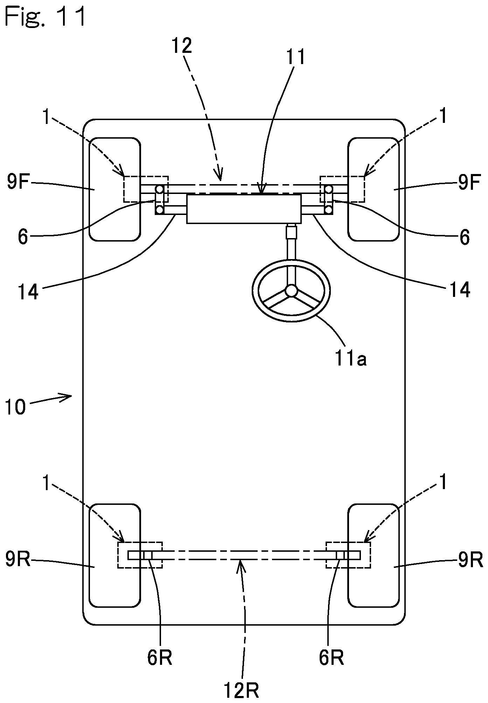

Alternatively, as shown in Fig. 11, the steering function-equipped hub units 1 may be used in all of the left and right front wheels 9F, 9F serving as steered wheels and the left and right rear wheels 9R, 9R serving as non-steered wheels.

### Steering System

As shown in Fig. 3, the steering system includes steering function-equipped hub units 1 according to any of the above embodiments and a control device 29 configured to control steering actuators 5 of the steering function-equipped hub units 1. The control device 29 includes a steering control section 30 and an actuator drive control section 31. The steering control section 30 is configured to output a current command signal S2 in accordance with a supplementary steering angle command signal (steering angle command signal) S1 given by a higher-order control section 32.

The higher-order control section 32 is a control unit superordinate to the steering control section 30. For example, the higher-order control section 32 may be an electric control unit (or a vehicle control unit, abbreviated as VCU) for performing general control of a vehicle. The actuator drive control section 31 is configured to output a driving current C in accordance with the current command signal inputted from the steering control section 30 to drive and control the steering actuators 5. The actuator drive control section 31 controls power to be supplied to coils of motors 26. The actuator drive control section 31 may be constituted as, for example, a non-illustrated half-bridge circuit including a switch element and is configured to perform PWM control for determining a motor application voltage in accordance with an ON-OFF duty cycle of the switch element. This makes it possible to change the angle of the wheel by a small angle in addition to steering in accordance with an operation of the steering wheel by a driver. Even when driving straight, the toe angles can be adjusted in accordance with a different situation.

The steering system may cause the steering actuators 5, 5 to operate in accordance with a command or the like from a non-illustrated autonomous driving device or driving assistance device, instead of an operation of the steering wheel by a driver.

Although the present invention has been fully described in connection with the embodiments thereof, the embodiments disclosed herein are merely examples in all respects and are not to be taken as limiting the scope of the present invention in any way whatsoever. The scope of the present invention is to be determined by the appended claims, not by the above description, and is intended to include any change made within the scope of claims or equivalent thereto.

### [Reference Numerals]

- 1: steering function-equipped hub unit
- 2: hub unit body
- 3: unit support member
- 5: steering actuator
- 6: knuckle (chassis frame component)
- 9: wheel
- 9F: front wheel
- 9R: rear wheel
- 12, 12R: suspension device
- 15: hub bearing
- 16b: turning shaft part
- 17: arm part
- 18a: hub axle part
- 18b: inner race part
- 19: outer race
- 29: control device
- 30: steering control section
- 31: actuator drive control section
- Sf: surface hardened layer
- Ym: preload applicator

## Claims

1. A steering function-equipped hub unit comprising:
a hub unit body including a hub bearing configured to support a wheel;
a unit support member configured to be provided to a chassis frame component of a suspension device, the unit support member supporting the hub unit body such that the hub unit body is rotatable about a turning axis extending in a vertical direction; and
a steering actuator configured to rotationally drive the hub unit body about the turning axis,
wherein the hub bearing includes an outer race integrally provided with turning shaft parts protruding upward and downward in the vertical direction on an outer peripheral surface of the outer race, each of the turning shaft parts having an axis coinciding with the turning axis, and
the hub unit body is rotatably supported by the unit support member through the turning shaft parts.

2. The steering function-equipped hub unit as claimed in claim 1, wherein the outer race is provided with an arm part configured to transmit a driving force of the steering actuator, and the arm part is integrally provided to the outer race so as to protrude in a horizontal direction on the outer peripheral surface of the outer race.

3. The steering function-equipped hub unit as claimed in claim 1 or 2, comprising a preload applicator applying a preload to the hub bearing, wherein the preload applicator is a nut fastened to fix an inboard-side end of an inner race part of the hub bearing with respect to a hub axle part of an outboard-side part of the hub bearing.

4. The steering function-equipped hub unit as claimed in claim 1 or 2, comprising a preload applicator applying a preload to the hub bearing, wherein the preload applicator is a crimped part fixing an inboard-side end of an inner race part of the hub bearing with respect to a hub axle part of an outboard-side part of the hub bearing by orbital forming.

5. The steering function-equipped hub unit as claimed in any one of claims 1 to 4, wherein the outer race is made of high-carbon steel, and a surface hardened layer is provided on the raceway surface of the outer race by induction hardening.

6. The steering function-equipped hub unit as claimed in any one of claims 1 to 4, wherein the outer race is made of case hardening steel, and a surface hardened layer is provided on an entire surface of the outer race by carburizing hardening.

7. A steering system comprising:
the steering function-equipped hub unit as claimed in any one of claims 1 to 6; and
a control device configured to control the steering actuator of the steering function-equipped hub unit,
wherein the control device includes a steering control section configured to output a current command signal in accordance with a given steering angle command signal and an actuator drive control section configured to output a current in accordance with the current command signal inputted from the steering control section to drive and control the steering actuator.

8. A vehicle comprising: steering function-equipped hub units as claimed in any one of claims 1 to 6, the steering function-equipped hub units supporting front wheels, or rear wheels, or all of the front wheels and the rear wheels.
